# EUROPEAN PATENT APPLICATION

(11) **EP 4 676 100 A1**
(43) Date of publication of application: **07.01.2026**
(21) Application number: 23945409.3
(22) Date of filing: 18.07.2023
(51) Int. Cl.: H04W 4/06

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Mewburn Ellis LLP
(86) International application number: PCT/CN2023/107839
(87) International publication number: WO 2025/015514

(57) **Abstract**

A method for wireless communication, a terminal device, and a network device are provided in the present disclosure. The method includes the following. A terminal device receives first indication information and second indication information, where the terminal device includes a first group identifier and a first hybrid automatic repeat request (HARQ) process, the first indication information indicates whether HARQ feedback is enabled for the first group identifier, and the second indication information indicates whether HARQ feedback is enabled for the first HARQ process. The terminal device determines, according to the first indication information and/or the second indication information, whether to transmit HARQ feedback information for a first physical downlink shared channel (PDSCH), where the first PDSCH is associated with the first HARQ process. Based on the present disclosure, it may be determined which of the first indication information or the second indication information is used for determining whether to transmit the HARQ feedback information for the first PDSCH. Therefore, even in the case where a conflict occurs between a configuration indicated by the first indication information and a configuration indicated by the second indication information, HARQ feedback enabling/disabling for the first PDSCH can still be clearly determined.

## Description

### TECHNICAL FIELD

This disclosure relates to the field of communication technology, in particular to a method for wireless communication, a terminal device, and a network device.

### BACKGROUND

In some communication technologies (e.g., non-terrestrial network (NTN)), hybrid automatic repeat request (HARQ) feedback enabling/disabling is configured for HARQ processes, while in multimedia/broadcast multicast services (MBS), HARQ feedback enabling/disabling is configured for group identifiers (e.g., a group radio network temporary identifier (G-RNTI)/group configured scheduling radio network temporary identifier (G-CS-RNTI)), which may lead to a conflict in HARQ feedback configurations. Exemplarily, in a scenario where NTN and MBS are combined, a network device may not be able to avoid using a same HARQ process for both MBS and unicast services, resulting in a conflict in HARQ feedback configurations. For example, MBS is configured with disabled HARQ feedback for a transmission of a G-RNTI, whereas NTN is configured with enabled HARQ feedback for a corresponding HARQ process. In the case where there is a conflict in HARQ feedback configurations, it is difficult for a terminal device to determine whether to enable HARQ feedback.

### SUMMARY

A method for wireless communication, a terminal device, and a network device are provided in the present disclosure. Various aspects involved in the present disclosure are described below.

In a first aspect, a method for wireless communication is provided. The method includes the following. A terminal device receives first indication information and second indication information, where the terminal device includes a first group identifier and a first hybrid automatic repeat request (HARQ) process, the first indication information indicates whether HARQ feedback is enabled for the first group identifier, and the second indication information indicates whether HARQ feedback is enabled for the first HARQ process. The terminal device determines, according to the first indication information and/or the second indication information, whether to transmit HARQ feedback information for a first physical downlink shared channel (PDSCH), where the first PDSCH is associated with the first HARQ process.

In a second aspect, a method for wireless communication is provided. The method includes the following. A network device transmits first indication information and second indication information to a terminal device, where the terminal device includes a first group identifier and a first HARQ process, the first indication information indicates whether HARQ feedback is enabled for the first group identifier, and the second indication information indicates whether HARQ feedback is enabled for the first HARQ process. The network device transmits a first PDSCH associated with the first HARQ process to the terminal device, where the first indication information and/or the second indication information is used for determining whether to transmit HARQ feedback information for the first PDSCH.

In a third aspect, a method for wireless communication is provided. The method includes the following. A terminal device receives first downlink data corresponding to a first HARQ process, where the first downlink data is indicated based on a first group identifier of the terminal device, and the first group identifier is configured with discontinuous reception (DRX). The terminal device starts a first timer associated with the first HARQ process after performing HARQ feedback for the first downlink data, where a duration of the first timer is determined based on a round-trip time (RTT) between the terminal device and a network device, and physical downlink control channel (PDCCH) monitoring is not performed during running of the first timer. The terminal device starts a second timer associated with the first HARQ process when the first timer expires, where PDCCH monitoring is performed during running of the second timer.

In a fourth aspect, a terminal device is provided. The terminal device includes a first receiving unit and a first determining unit. The first receiving unit is configured to receive first indication information and second indication information, where the terminal device includes an HARQ process, the first indication information indicates whether HARQ feedback is enabled for the first group identifier, and the second indication information indicates whether HARQ feedback is enabled for the first HARQ process. The first determining unit is configured to determine, according to the first indication information and/or the second indication information, whether to transmit HARQ feedback information for a first PDSCH, where the first PDSCH is associated with the first HARQ process.

In a fifth aspect, a network device is provided. The network device includes a first transmitting unit and a second transmitting unit. The first transmitting unit is configured to transmit first indication information and second indication information to a terminal device, where the terminal device includes a first group identifier and a first HARQ process, the first indication information indicates whether HARQ feedback is enabled for the first group identifier, and the second indication information indicates whether HARQ feedback is enabled for the first HARQ process. The second transmitting unit is configured to transmit a first PDSCH associated with the first HARQ process to the terminal device, where the first indication information and/or the second indication information is used for determining whether to transmit HARQ feedback information for the first PDSCH.

In a sixth aspect, a terminal device is provided. The terminal device includes a second receiving unit, a first starting unit, and a second starting unit. The second receiving unit is configured to receive first downlink data corresponding to a first HARQ process, where the first downlink data is indicated based on a first group identifier of the terminal device, and the first group identifier is configured with DRX. The first starting unit is configured to start a first timer associated with the first HARQ process after performing HARQ feedback for the first downlink data, where a duration of the first timer is determined based on an RTT between the terminal device and a network device, and PDCCH monitoring is not performed during running of the first timer. The second starting unit is configured to start a second timer associated with the first HARQ process when the first timer expires, where PDCCH monitoring is performed during running of the second timer.

In a seventh aspect, a terminal device is provided. The terminal device includes a processor and a memory. The memory is configured to store one or more computer programs. The processor is configured to invoke the one or more computer programs stored in the memory, to cause the terminal device to perform some or all operations of the method in the first aspect and/or the third aspect.

In an eighth aspect, a network device is provided. The network device includes a processor, a memory, and a transceiver. The memory is configured to store one or more computer programs. The processor is configured to invoke the one or more computer programs stored in the memory, to cause the network device to perform some or all operations of the method in the second aspect.

In a ninth aspect, a communication system is provided in embodiments of the present disclosure. The system includes the terminal device and/or the network device. In another possible design, the system may further include other devices that interact with the terminal device and/or the network device in technical solutions provided in embodiments of the present disclosure.

In a tenth aspect, a computer-readable storage medium is provided in embodiments of the present disclosure. The computer-readable storage medium is configured to store a computer program that causes the terminal device and/or the network device to perform some or all operations of the method in various aspects mentioned above.

In an eleventh aspect, a computer program product is provided in embodiments of the present disclosure. The computer program product includes a non-transitory computer-readable storage medium storing a computer program. The computer program is operable with the terminal device and/or the network device to perform some or all operations of the method in various aspects mentioned above. In some embodiments, the computer program product may be a software installation package.

In a twelfth aspect, a chip is provided in embodiments of the present disclosure. The chip includes a memory and a processor. The processor is configured to invoke and execute a computer program stored in the memory, to perform some or all operations of the method in various aspects mentioned above.

Based on the present disclosure, it may be determined which piece of information or which pieces of information is used for determining whether to transmit the HARQ feedback information for the first PDSCH. As such, even in the case where a conflict occurs between an HARQ feedback configuration indicated by the first indication information and an HARQ feedback configuration indicated by the second indication information, HARQ feedback enabling/disabling for the first PDSCH can still be clearly determined.

### BRIEF DESCRIPTION OF THE DRAWINGS

FIG. 1 is a schematic diagram illustrating a wireless communication system to which embodiments of the present disclosure are applicable.
FIG. 2 is a schematic diagram illustrating a transparent payload network architecture.
FIG. 3 is a schematic diagram illustrating a regenerative payload network architecture.
FIG. 4A is an exemplary diagram illustrating a point-to-point (PTP) transmission mode.
FIG. 4B is an exemplary diagram illustrating a multi-point to point (MTP) transmission mode.
FIG. 5 is a schematic flowchart illustrating a method for wireless communication provided in embodiments of the present disclosure.
FIG. 6 is a schematic flowchart illustrating another method for wireless communication provided in embodiments of the present disclosure.
FIG. 7 is a schematic structural diagram of a terminal device provided in embodiments of the present disclosure.
FIG. 8 is a schematic structural diagram of a network device provided in embodiments of the present disclosure.
FIG. 9 is a schematic structural diagram of another terminal device provided in embodiments of the present disclosure.
FIG. 10 is a schematic structural diagram of an apparatus for communication provided in embodiments of the present disclosure.

### DETAILED DESCRIPTION

The following will describe technical solutions of the present disclosure with reference to accompanying drawings.

### Communication system

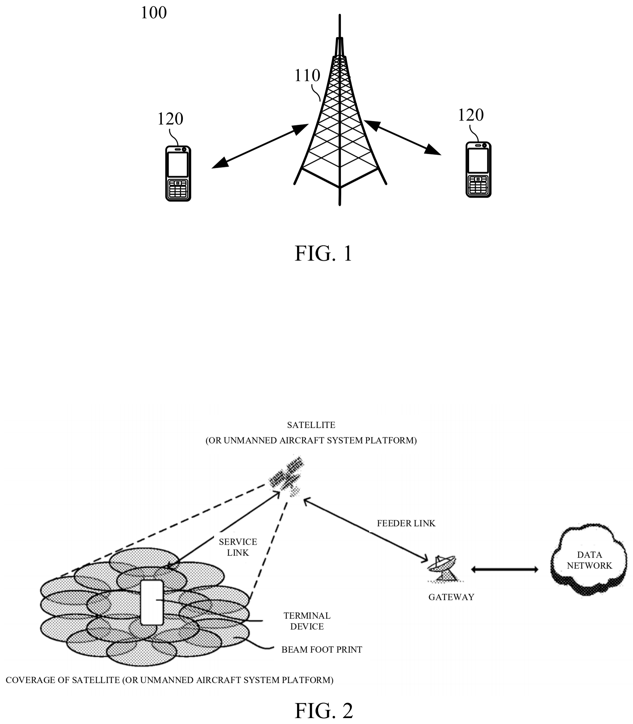

FIG. 1 is a wireless communication system 100 to which embodiments of the present disclosure are applicable. The wireless communication system 100 may include a communication device. The communication device may include a network device 110 and a terminal device 120. The network device 110 may be a device that communicates with the terminal device 120.

FIG. 1 exemplarily illustrates one network device and two terminals. Optionally, the wireless communication system 100 may include multiple network devices, and there may be other quantities of terminal devices in the coverage of each network device, which is not limited in embodiments of the present disclosure.

Optionally, the wireless communication system 100 may further include other network entities such as a network controller, a mobility management entity (MME), etc., which are not limited in embodiments of the present disclosure.

It may be understood that, the technical solutions of embodiments of the present disclosure are applicable to various communication systems, for example, a 5th-generation (5G) system or a new radio (NR) system, a long-term evolution (LTE) system, and an LTE frequency division duplex (FDD) system, an LTE time division duplex (TDD) system, etc. The technical solutions of embodiments of the present disclosure are also applicable to future communication systems, such as a sixth generation (6G) mobile communication system, a satellite communication system, etc.

The 5G system studied by the 3rd generation partnership project (3GPP) aims to meet people's requirements on rate, delay, high-speed mobility, and energy efficiency, and is adapted to diversity and complexity of services in future life. The 5G system is mainly applicable to enhanced mobile broadband (eMBB), ultra-reliable low-latency communication (URLLC), and massive machine type communication (mMTC).

The terminal device in embodiments of the present disclosure may also be referred to as a user device (UE), an access terminal, a subscriber unit, a subscriber station, a mobile station (MS), a mobile terminal (MT), a remote station, a remote terminal, a mobile device, a user terminal, a terminal, a wireless CN network element, a user agent, a user device, etc. The terminal device in embodiments of the present disclosure may be a device that provides voice and/or data connectivity to a user and is capable of connecting people, objects, and machines, such as a handheld device with a wireless connection function, a vehicle-in device, etc. The terminal device in embodiments of the present disclosure may be a mobile phone, a pad, a laptop computer, a tablet computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Optionally, the UE may be used to act as a base station. For example, the UE may act as a scheduling entity that provides a sidelink signal between UEs in vehicle-to-everything (V2X), device-to-device (D2D), etc. For example, a cellular phone and a vehicle communicate with each other by using a sidelink signal. A cellular phone and a smart home device communicate with each other, without relaying a communication signal by using a base station.

The network device in embodiments of the present disclosure may be a device for communicating with the terminal device. The network device may also include an access network (AN) device. The AN device may provide communication coverage for a specific geographic area, and may communicate with terminal devices 120 within the coverage area. The AN may also be referred to as a wireless AN device, a base station, etc. The AN device in embodiments of the present disclosure may refer to a radio access network (RAN) node (or device) that accesses the terminal device to a wireless network. The AN device may broadly cover various names in the following, or may be interchangeable with one of the following names, for example, an NodeB, an evolved NodeB (eNB), a next generation NodeB (gNB), a relay station, an access point, a transmission reception point (TRP), a transmitting point (TP), a master MeNB, a secondary SeNB, a multi-standard radio (MSR) node, a home base station, a network controller, an access node, a radio node, an access point (AP), a transmission node, a transceiver node, a baseband unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, etc., or a combination thereof. The base station may also refer to a communication module, a modem, or a chip that is configured in the foregoing device or apparatus. The base station may also be a mobile switching center, a device acting as a base station in D2D communication, V2X communication, or machine-to-machine (M2M) communication, a network-side device in a 6G network, a device acting as a base station in a future communication system, etc. The base station may support networks of the same or different access technologies, and there is no limitation on the technology and device form adopted by the network device in embodiments of the present disclosure.

The base station may be fixed or mobile. For example, a helicopter or an unmanned aerial vehicle may be configured to act as a mobile base station, and one or more cells may move depending on a position of the mobile base station. In other examples, a helicopter or an unmanned aerial vehicle may be configured to serve as a device in communication with another base station.

A communication device involved in the wireless communication system may include not only the AN device and the terminal device, but also a CN element. The CN element may be implemented as a device, i.e., the CN element is a CN device. It may be understood that, the CN device may also be a network device.

A CN network element in embodiments of the present disclosure may include a network element that processes and forwards signaling and data of a user. For example, the CN device may include a core access and mobility management function (AMF), a session management function (SMF), a user plane gateway, a location management function (LMF), etc. The user plane gateway may be a server that has functions such as mobility management, routing, and forwarding specific to user plane data. The user plane gateway, for example, a serving gateway (SGW), a packet data network gateway (PGW), a user plane function (UPF), etc., is generally located on a network side. Certainly, the CN may also include other network elements, which are not listed one by one herein.

In some deployments, the network device in embodiments of the present disclosure may be a CU or a DU, or the network device may include a CU and a DU. The gNB may also include an AAU.

It may be understood that, the network device may be deployed on land, which includes indoor or outdoor, handheld, wearable, or in-vehicle, may be deployed on water, or may be deployed in the air (such as airplanes, balloons, satellites, etc.). The scenarios in which the network device is located are not limited in embodiments of the present disclosure.

It may be understood that, all or some of functions of the communication device in the present disclosure may also be implemented by software functions running on hardware, or by virtualization functions implemented on a platform (e.g., a cloud platform).

### Radio resource control (RRC) connected state

In some communication systems (e.g., the NR system), an RRC state ("state" for short) may include an RRC idle state (RRC_IDLE), an RRC connected state (RRC_CONNECTED), an RRC inactive state (RRC_INACTIVE), etc. The RRC idle state is referred to as "idle state" for short, the RRC connected state is referred to as "connected state" for short, and the RRC inactive state is referred to as "inactive state" for short.

In RRC_IDLE, there is no RRC connection between the terminal device and the network device. The mobility of the terminal device is mainly based on cell selection/re-selection by the terminal device. In RRC_IDLE, paging for the terminal device by the network device is initiated by a CN, and a paging area is configured by the CN. In addition, in RRC_IDLE, the network device does not have access stratum (AS) context of the terminal device.

In RRC_CONNECTED, there is an RRC connection between the terminal device and the network device. Both the network device and the terminal have the AS context of the terminal device. In RRC_CONNECTED, a location of the terminal device known to the network device is at a cell level. In RRC_CONNECTED, unicast data may be transmitted between the terminal device and the network device, and the mobility of the terminal device is managed and controlled by the network device.

RRC_INACTIVE is a new state defined in some communication systems (e.g., the NR system). The RRC_INACTIVE can reduce air interface signaling of the communication system. In addition, a terminal device in RRC _INACTIVE can quickly restore wireless connectivity and resume data services. In RRC_INACTIVE, there is a CN-NR connection. A certain network device has the AS context of the terminal device. Moreover, in RRC_INACTIVE, paging for the terminal device by the network device may be triggered by an RAN, and an RAN-based paging area may be managed by the RAN. Furthermore, in RRC_INACTIVE, the location of the terminal device known to the network device is at an RAN-based paging area level, and the mobility of the terminal device is mainly based on cell selection/re-selection by the terminal device.

### Non-terrestrial network (NTN)

An NTN provides a user with a communication service in a non-terrestrial manner. The non-terrestrial manner may include, for example, a satellite or an unmanned aircraft system (UAS) platform.

For a terrestrial network (TN), in a scenario such as a sea, a mountain, or a desert, a communication device cannot be set up for land communication. Alternatively, considering construction and operation costs of the communication device, land communication generally does not cover a sparsely populated area. The NTN has many advantages over the TN. First, NTN communication may not be limited by a user area. NTN communication network is not limited by an area. In theory, a satellite may orbit the earth, and thus every corner of the earth may be covered by satellite communication. In addition, an area that may be covered by an NTN communication device is far larger than an area covered by a terrestrial communication device. For example, in satellite communication, a satellite may cover a relatively large terrestrial area. Second, NTN communication has a great social value. The NTN communication may implement coverage at low costs, for example, may cover remote mountains or poor and backward countries or regions at low costs through satellite communication. This enables people in these regions to enjoy advanced voice communication and mobile internet technologies, which helps narrow the digital divide with developed regions and promotes the development of these regions. Third, the communication distance of NTN communication is long, and communication costs are not significantly increased. In addition, the NTN communication has high stability. For example, the NTN communication may not be limited by a natural condition, and may be used even in a case of a natural disaster.

According to orbital altitude, communication satellites may be classified into a low-earth orbit (LEO) satellite, a medium-earth orbit (MEO) satellite, a geostationary earth orbit (GEO) satellite, a high elliptical orbit (HEO) satellite, etc. The following describes the LEO satellite and the GEO satellite in detail.

An orbital altitude of the LEO satellite ranges from 500 kilometers (km) to 1500 km. An orbital period is about 1.5 hours to 2 hours. A signal propagation delay of single-hop communication between users is generally less than 20 milliseconds (ms). A maximum satellite visible time is 20 minutes. A signal propagation distance is short, a link loss is small, and a transmission power requirement for a user terminal is not high.

An orbital altitude of the GEO satellite is 35,786 km. A rotation period of the GEO satellite around the earth is 24 hours. A signal propagation delay of single-hop communication between users is generally 250 ms.

To ensure coverage of a satellite and improve the system capacity of an entire satellite communication system, the satellite may use multiple beams to cover the ground. For example, one satellite may form dozens or even hundreds of beams to cover the ground. One satellite beam may cover a terrestrial area of tens to hundreds of kilometers in diameter.

An NTN network may be implemented based on a satellite network architecture. The satellite network architecture may include the following network elements: a gateway, a feeder link, a service link, a satellite, an inter-satellite link (ISL), etc.

There may be one or more gateways. The gateway may be configured to connect the satellite to a terrestrial public network. The gateway is usually located on the ground.

The feeder link may be a link for communication between the gateway and the satellite.

The service link may be a link for communication between a terminal device and the satellite.

The satellite network architecture may be classified into a transparent payload network architecture and a regenerative payload network architecture in terms of provided functions.

FIG. 2 is a schematic diagram illustrating a transparent payload network architecture. The transparent payload network architecture may provide radio frequency filtering, frequency conversion, and amplification functions. The transparent payload network architecture only forwards a signal, and does not change a waveform signal forwarded by the transparent payload network architecture.

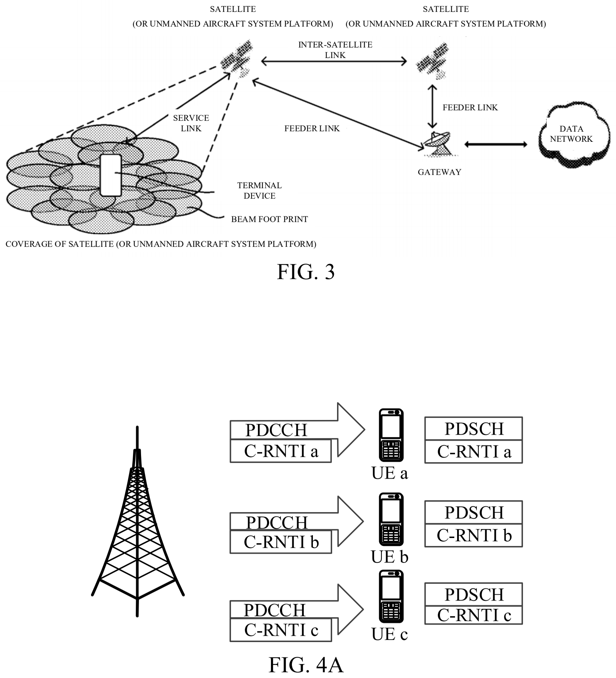

FIG. 3 is a schematic diagram illustrating a regenerative payload network architecture. The regenerative payload network architecture may provide radio frequency filtering, frequency conversion, and amplification functions, and may further provide demodulation/decoding, routing/conversion, and encoding/modulation functions. In the regenerative payload network architecture, a satellite may have some or all of functions of a base station. The inter-satellite link may exist in the regenerative payload network architecture.

### Hybrid automatic repeat request (HARQ) enhancement in NTN

In NTN, the satellite-to-ground latency is relatively long. For example, a GEO satellite at an altitude of 35,786 km can have a single-hop transmission latency of 272.4 ms. For another example, a non-GEO satellite (e.g., an LEO satellite at an altitude of 600 km) has a single-hop transmission latency of at least 14.2 ms. For another example, an MEO satellite at an altitude of 10,000 km can have a single-hop transmission latency of 95.2 ms. The longer latency poses challenges to the application of HARQ retransmission technology in the TN to the NTN. For example, at least for GEO and MEO networks, an excessive number of HARQ processes can lead to limited caching capability of the terminal device. Therefore, some communication protocols (e.g., 3GPP Rel-17) specify that the NTN has the capability to configure whether the terminal device can disable HARQ feedback and retransmission functions, i.e., configuring HARQ feedback enabling/disabling. Additionally, the NTN may determine that only up to 32 HARQ processes are supported based on the capability of the terminal.

HARQ enabling or disabling means that the terminal device cannot perform soft combining. When PDSCH transmission fails, retransmission at a radio link control (RLC) layer can still be performed, but there may be the following issues compared with HARQ retransmission at a medium access control (MAC) layer. First, the spectral efficiency is low, and the terminal device is unable to perform soft combining on results of multiple retransmissions. Second, the latency is longer. To avoid retransmission at the RLC layer, the NTN needs to improve the success rate of an initial transmission by reducing spectral efficiency (e.g., through duplication transmissions, high block error ratio (BLER) targets, low modulation and coding scheme (MCS) scheduling, etc.), which also leads to lower frequency efficiency of the NTN. Therefore, in order to avoid blindly applying such an energy-intensive and inefficient technology in a simple "one-size-fits-all" manner, NTN-oriented HARQ process enhancement has been proposed in the related art. The NTN-oriented HARQ process enhancement mainly includes the following two aspects.

In the first aspect, for a downlink (DL), HARQ feedback may be enabled/disabled. However, in semi-persistent scheduling (SPS) de-activation scenarios, HARQ feedback may be required to be transmitted always. HARQ feedback enabling/disabling is configured per HARQ process. The network device may configure, via RRC signaling, which of HARQ processes of the terminal device have enabled HARQ feedback and/or which of the HARQ processes of the terminal device have disabled HARQ feedback.

In the second aspect, for dynamic authorization on an uplink (UL), the network device may configure a UL HARQ state for each HARQ process of the terminal device. The UL HARQ state may include: an allowed retransmission mode or a non-retransmission mode. In addition, each logical channel (LCH) may be configured to be transmitted in a specific UL HARQ state. Therefore, data in an LCH configured with a UL HARQ state may only be mapped to an HARQ process configured with the same state; otherwise, data processing errors will be caused.

### Multicast/broadcast services (MBS)

Some video software transmits data content in a unicast form. When the number of users is too high, unicast may overwhelm the network, resulting in congestion. In this case, a wireless downlink rate may become a bottleneck for user experience. Therefore, when multiple users in a wireless cell are simultaneously watching video content, broadcast in the cell may be considered to enable smooth viewing for the multiple users. The development of MBS in some communication systems (e.g., the NR system) allows multimedia content to be delivered to the terminal device via broadcast transmission, thereby enabling users to watch broadcast TV programs or receive data push services anytime and anywhere.

In a physical layer design of MBS in some communication systems (e.g., a Rel-17 NR system), the terminology of MBS varies slightly depending on a state of a terminal device receiving the MBS. Multicast refers to the transmission of MBS from the network device to a group of terminal devices in a connected state. The network device may transmit a group common physical downlink control channel (GC-PDCCH) to schedule a group common physical downlink shared channel (GC-PDSCH). A cyclic redundancy check (CRC) of the GC-PDCCH may be scrambled with a group radio network temporary identifier (G-RNTI) or a group configured scheduling radio network temporary identifier (G-CS-RNTI). Broadcast refers to the transmission of MBS from the network device to terminal devices within the coverage of the network device. Tthe terminal device may be either in a connected state or a disconnected state, and the network device may transmit a GC-PDCCH to schedule a GC-PDSCH. A CRC of the GC-PDCCH may be scrambled with a multicast control channel radio network temporary identity (MCCH-RNTI) or a G-RNTI.

NR MBS is taken as an example, and the following is an example of a transmission mode supported by multicast scheduling. For a terminal device in a connected state, the transmission mode may include a point-to-point (PTP) transmission mode and a point-to-multipoint (PTM) transmission mode.

In the PTP transmission mode, for a terminal device in a connected state, the network device may transmit a dedicated PDCCH to the terminal device. A CRC of the dedicated PDCCH may be scrambled with a dedicated radio network temporary identifier (RNTI) (e.g., a C-RNTI) for the terminal device. The dedicated PDCCH for the terminal device indicates a dedicated PDSCH for the terminal device. The indicated PDSCH is scrambled with the same dedicated RNTI for the terminal device as the dedicated PDCCH.

As illustrated in FIG. 4A, in the PTP transmission mode, for three terminal devices illustrated in FIG. 4A (denoted by UE a, UE b, and UE c), the network device transmits a corresponding dedicated PDCCH to each of the three terminal devices. A dedicated PDCCH for UE a is scrambled with a dedicated C-RNTI for UE a (denoted by C-RNTI a), the dedicated PDCCH for UE a indicates a dedicated PDSCH for UE a, and the dedicated PDSCH for UE a is also scrambled with C-RNTI a. A dedicated PDCCH for UE b is scrambled with a dedicated C-RNTI for UE b (denoted by C-RNTI b), the dedicated PDCCH for UE b indicates a dedicated PDSCH for UE b, and the dedicated PDSCH for UE b is also scrambled with C-RNTI b. A dedicated PDCCH for UE c is scrambled with a dedicated C-RNTI for UE c (denoted by C-RNTI c), the dedicated PDCCH for UE c indicates a dedicated PDSCH for UE c, and the dedicated PDSCH for UE c is also scrambled with C-RNTI c.

It may be noted that, the PTP transmission mode may only be used as a transmission mode for retransmission in MBS.

In the PTM transmission mode, for a group of terminal devices in a connected state, the network device may transmit a GC-PDCCH to the group of terminal devices. A CRC of the GC-PDCCH may be scrambled with a group common RNTI. The GC-PDCCH is used for scheduling a GC-PDSCH, and the scheduled PDSCH is also scrambled with the same group common RNTI as the GC-PDCCH.

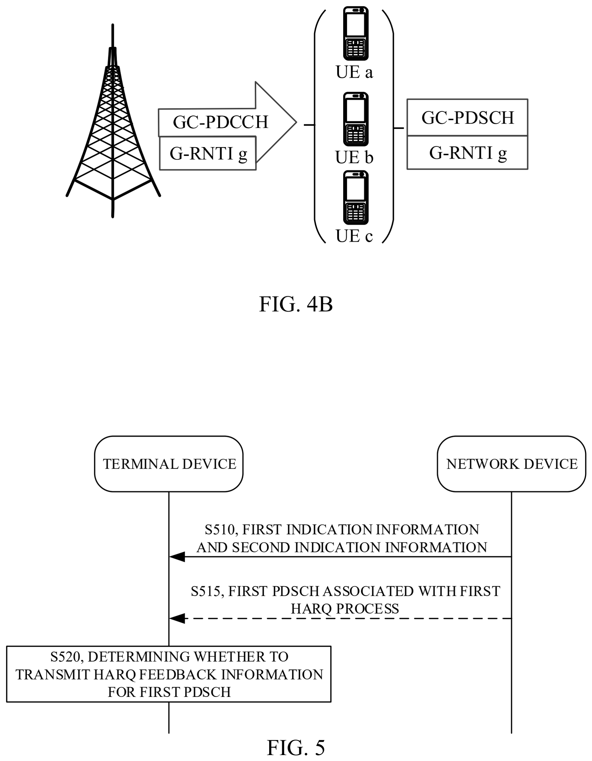

As illustrated in FIG. 4B, in the PTM transmission mode, three terminal devices (denoted by UE a, UE b, and UE c) illustrated in FIG. 4B form a group of terminal devices (group is denoted by g). The network device transmits a GC-PDCCH to the group of terminal devices. The GC-PDCCH is used for scheduling a GC-PDSCH. Both the GC-PDCCH and the GC-PDSCH are scrambled with a G-RNTI (denoted by G-RNTI g) for the group.

### HARQ feedback in MBS

Group scheduling efficiency may be further improved through HARQ feedback. MBS supports the following two types of HARQ feedback reports.

The first HARQ feedback reporting mode is based on the concept of unicast HARQ feedback. If the terminal device correctly receives a transport block (TB), HARQ acknowledgement (HARQ-ACK) information is carried in a PUCCH. If the terminal does not correctly receive a TB, HARQ negative acknowledgement (HARQ-NACK) information is transmitted. The first HARQ feedback reporting mode may also be referred to as "acknowledgement/negative acknowledgement (ACK/NACK) mode".

For example, the network device may schedule an initial transmission of a TB to a group of terminal devices using PTM transmission mode 1. According to feedback (ACK, NACK, or without any feedback) from each of the group of terminal devices, the network device may schedule a retransmission of the TB using either PTM transmission mode 1 or PTP transmission mode.

For the second HARQ feedback reporting mode, HARQ-NACK information is transmitted in a PUCCH only when the terminal device does not correctly receive a TB. The second HARQ feedback reporting mode may also be referred to as "negative acknowledgment only (NACK-only) mode.

For example, when the network device configures the second HARQ feedback reporting mode for the terminal device, the network device may schedule an initial transmission of a TB to a group of terminal devices using PTM transmission mode 1. If at least one terminal device in the group of terminal devices feeds back a NACK, the network device can schedule a retransmission of the TB using PTM transmission mode 1.

For MBS, the network device may enable/disable multicast HARQ feedback. For the terminal device, the network device may semi-statically or dynamically enable/disable multicast HARQ feedback. For example, the network device may semi-statically enable/disable multicast HARQ feedback via RRC signaling. Alternatively, the network device may dynamically enable/disable multicast HARQ feedback via downlink control information (DCI). It may be noted that, enabling/disabling HARQ feedback is specific to a group of terminal devices, that is, enabling/disabling HARQ feedback is configured per G-RNTI/G-CS-RNTI. For example, enabling/disabling HARQ feedback in RRC signaling is configured per G-RNTI/G-CS-RNTI.

### Discontinuous reception (DRX) in MBS

In some communication systems, a network device may configure a DRX functionality for a terminal device. In the case where the terminal device is configured with the DRX function, the terminal device can perform discontinuous PDCCH monitoring, thereby saving power for the terminal.

For MBS, the DRX functionality is configured per a group of terminal devices, i.e., the DRX function is configured per G-RNTI/G-CS-RNTI.

Configuration parameters of DRX in MBS may include one or more of: *drx-onDurationTimerPTM, drx-SlotOffsetPTM, drx-InactivityTimerPTM, drx-LongCycleStartOffsetPTM, drx-HARQ-RTT-TimerDL-PTM, drx-RetransmissionTimerUL-PTM,* and *drx-LongCycleStartOffsetPTM.*
*drx-onDurationTimerPTM* indicates the duration at the beginning of a DRX cycle.
*drx-SlotOffsetPTM* indicates the delay before starting the drx-onDurationTimerPTM.
*drx-InactivityTimerPTM* indicates the duration after the PDCCH occasion in which a PDCCH indicates a new DL multicast transmission for the MAC entity.
*drx-LongCycleStartOffsetPTM* indicates the long DRX cycle (*drx-LongCycle-PTM*) and *drx-StartOffset-PTM* which defines the subframe where the long DRX cycle starts.
*drx-HARQ-RTT- TimerDL-PTM* is configured per DL HARQ process for MBS multicast. *drx-RetransmissionTimerDL-PTM* indicates the maximum duration until a DL multicast retransmission is received.
*drx-HARQ-RTT-TimerDL-PTM* is configured per DL HARQ process for MBS multicast. *drx-HARQ-RTT-TimerDL-PTM* indicates the minimum duration before a DL multicast assignment for HARQ retransmission is expected by the MAC entity.

The following describes drx-HARQ-RTT-TimerDL-PTM and drx-HARQ-RTT-TimerDL-PTM in detail.

In a case where the terminal device receives a DL data transmission packet and CRC check fails, after the terminal device feeds back NACK to the network device, there is no retransmission until at least a duration of a drx-HARQ-RTT-TimerDL-PTM has elapsed. Therefore, when the drx-HARQ-RTT-TimerDL-PTM is running, the terminal device does not need to perform PDCCH monitoring, thus saving power consumption. Once the drx-HARQ-RTT-TimerDL-PTM expires, it means that the terminal device can start the drx-HARQ-RTT-TimerDL-PTM, and receive data retransmitted by the network device before the expiry of the drx-HARQ-RTT-TimerDL-PTM.

For per G-RNTI/G-CS-RNTI, a condition for the terminal device to start and stop a drx-RetransmissionTimerDL-PTM includes the following. When a PDCCH indicating a DL transmission is received by the terminal device or a medium access control packet data unit (MACPDU) is received by the terminal device on a configured DL grant resource, the terminal device stops a drx-RetransmissionTimerDL-PTM for a corresponding HARQ process. After the terminal device completes the transmission of HARQ feedback for the DL transmission, the terminal device starts a drx-HARQ-RTT-TimerDL-PTM for the corresponding HARQ process.

A condition for the terminal device to start the drx-RetransmissionTimerDL-PTM includes the following. If drx-HARQ-RTT-TimerDL-PTM for a certain HARQ process of the terminal device expires and DL data transmitted by using the HARQ process was not successfully decoded, the terminal device starts a drx-RetransmissionTimerDL-PTM for the HARQ process.

As can be seen from the above, in some communication technologies (e.g., NTN), HARQ feedback enabling/disabling is configured per HARQ process, while in MBS, HARQ feedback enabling/disabling is configured per G-RNTI/G-CS-RNTI, which may lead to a conflict in HARQ feedback configurations. Exemplarily, in a scenario where NTN and MBS are combined, a network may not be able to avoid using the same HARQ process for both MBS and unicast services, resulting in a conflict in HARQ feedback configurations. For example, MBS is configured with disabled HARQ feedback for a transmission of a G-RNTI, whereas NTN is configured with enabled HARQ feedback for a corresponding HARQ process. In the case where there is a conflict in HARQ feedback configurations, it is difficult for the terminal device to determine whether to enable HARQ feedback.

FIG. 5 is a schematic flowchart illustrating a method for wireless communication provided in embodiments of the present disclosure, which aims to address the above problem. The method illustrated in FIG. 5 may be performed by both a terminal device and a network device. The method illustrated in FIG. 5 may include operations at S510 and S520.

At S510, the terminal device receives first indication information and second indication information transmitted by the network device.

To facilitate understanding of the first indication information, a first group identifier included in the terminal device is first described below.

The terminal device may belong to a first broadcast multicast group, and the first broadcast multicast group may include one or more terminal devices. The first group identifier may be associated with the first broadcast multicast group. The network device may transmit data to the first broadcast multicast group through MBS. The network device may schedule a GC-PDSCH for the first broadcast multicast group by transmitting a GC-PDCCH. The first group identifier may be used for scrambling the GC-PDCCH and the GC-PDSCH for the first broadcast multicast group. The first group identifier may include a G-RNTI or a G-CS-RNTI.

The network device may configure one or more group identifiers for the terminal device. The one or more group identifiers may include the first group identifier.

The first indication information indicates whether HARQ feedback is enabled for the first group identifier. It may be appreciated that, the first indication information indicates whether HARQ feedback is enabled at a granularity of group identifiers. In a possible embodiment, the first indication information may indicate HARQ feedback enabling/disabling in the MBS.

In a possible embodiment, in the case where the first group identifier belongs to the one or more group identifiers configured for the terminal device, the first indication information indicates whether HARQ feedback is enabled for each of the one or more group identifiers.

The second indication information indicates whether HARQ feedback is enabled for a first HARQ process for the terminal device. It may be appreciated that, the second indication information indicates whether HARQ feedback is enabled at a granularity of HARQ processes. In a possible embodiment, the second indication information may indicate HARQ feedback enabling/disabling in the NTN.

In a possible embodiment, the second indication information indicates HARQ feedback enabling/disabling for each HARQ process.

At S520, the terminal device determines, according to the first indication information and/or the second indication information, whether to transmit HARQ feedback information for the first PDSCH.

Before the operations at S520, the method may include operations at S515. At S515, the network device transmits the first PDSCH associated with the first HARQ process to the terminal device.

The network device may transmit the first PDSCH to the terminal device through MBS, i.e., the first PDSCH may belong to the GC-PDSCH and is indicated via the first group identifier. The network device may also transmit the first PDSCH to the terminal device through unicast, i.e., the first PDSCH may be indicated via a dedicated RNTI for the terminal device. The dedicated RNTI may include, for example, a C-RNTI or a temporary cell radio network temporary identifier (TC-RNTI).

The first PDSCH may be a PDSCH transmitted in NTN or a PDSCH transmitted in TN.

As described above, the first indication information indicates whether HARQ feedback is enabled for the first group identifier, and the second indication information indicates whether HARQ feedback is enabled for the first HARQ process. The indication of the first indication information may conflict or may not be matched with the indication of the second indication information, i.e., there may be a conflict in the configuration of whether to enable HARQ feedback. For example, the first indication information indicates enabling HARQ feedback, and the second indication information indicates disabling HARQ feedback. Alternatively, the first indication information indicates disabling HARQ feedback, and the second indication information indicates enabling HARQ feedback.

In the present disclosure, whether to transmit the HARQ feedback information for the first PDSCH may be determined according to the first indication information and/or the second indication information. In other words, in the present disclosure, it may be determined which piece of information or which pieces of information is used for determining whether to transmit the HARQ feedback information for the first PDSCH. For example, HARQ feedback enabling/disabling for the first PDSCH may be determined only according to the first indication information. Alternatively, HARQ feedback enabling/disabling for the first PDSCH may be determined only according to the second indication information. Alternatively, HARQ feedback enabling/disabling for the first PDSCH may be determined jointly according to the first indication information and the second indication information. Therefore, even in the case where a conflict occurs between a configuration indicated by the first indication information and a configuration indicated by the second indication information, HARQ feedback enabling/disabling for the first PDSCH can still be clearly determined.

In some embodiments, whether to transmit the HARQ feedback information for the first PDSCH may be determined according to the first indication information. That is, the first indication information may be used for determining whether to transmit the HARQ feedback information for the first PDSCH.

In an embodiment, in the case where the first PDSCH is a PDSCH for MBS, whether to transmit the HARQ feedback information for the first PDSCH may be determined according to the first indication information.

In an embodiment, in the case where the first PDSCH is indicated based on the first group identifier, whether to transmit the HARQ feedback information for the first PDSCH may be determined according to the first indication information.

It may be noted that, the first PDSCH may be indicated based on the first group identifier as follows. The first PDSCH is scrambled based on the first group identifier. For example, in the case where the first group identifier includes a G-RNTI, the first PDSCH may be scheduled or activated based on a PDCCH scrambled with the G-RNTI. In some embodiments, the first PDSCH may be indicated based on the first group identifier as follows. The first transmission of a configured DL assignment is scheduled or activated by a PDCCH scrambled with a G-CS-RNTI. In the case where the first group identifier includes the G-CS-RNTI, the first PDSCH is a PDSCH for the configured DL assignment, and the configured DL assignment is associated with the G-CS-RNTI.

In the present disclosure, whether the first PDSCH is related to MBS may be determined first, and then HARQ feedback enabling/disabling indication information for MBS is used, thereby prioritizing the HARQ feedback requirements for MBS and improving the transmission success rate of MBS.

In some embodiments, in the case where the first PDSCH is indicated based on a dedicated RNTI for the terminal device, whether to transmit the HARQ feedback information for the first PDSCH may be determined according to the first indication information and/or the second indication information. That is, the first indication information or the second indication information may be used for determining whether to transmit the HARQ feedback information for the first PDSCH. The first PDSCH may be indicated based on the dedicated RNTI as follows. The first PDSCH is scheduled or activated based on a PDCCH scrambled with the dedicated RNTI.

The first PDSCH may be a retransmitted PDSCH or an initially transmitted PDSCH. Based on whether the first PDSCH is a newly transmitted PDSCH or a retransmitted PDSCH, it may be determined which one or both of the first indication information and the second indication information is used for determining whether to transmit the HARQ feedback information for the first PDSCH. The following provides a detailed explanation.

For example, the first PDSCH is the initially transmitted PDSCH. If the first PDSCH is indicated based on the dedicated RNTI, the second indication information may be used for determining whether to transmit the HARQ feedback information for the first PDSCH. That is, if the first PDSCH is the initially transmitted PDSCH, the terminal device may determine, according to the HARQ feedback enabling/disabling indication information configured for the first HARQ process, whether to transmit HARQ feedback, and may also ignore HARQ feedback enabling/disabling indication information configured for the first group identifier.

When the first PDSCH is indicated based on the dedicated RNTI and the first PDSCH is the initially transmitted PDSCH, it may be determined that the first PDSCH is for unicast services. For unicast services, whether to transmit the HARQ feedback information for the first PDSCH may be determined according to the second indication information.

The following is an example of the first PDSCH being the retransmitted PDSCH.

In some embodiments, in the case where the first PDSCH is indicated based on the dedicated RNTI and the first PDSCH is the retransmitted PDSCH, whether to transmit the HARQ feedback information for the first PDSCH may be determined according to the first indication information and/or the second indication information.

In a possible embodiment, when the first PDSCH is indicated based on the dedicated RNTI and the first PDSCH is the retransmitted PDSCH, based on whether the first PDSCH is for MBS or unicast services, it may be determined whether the first indication information or the second indication information is used for determining the HARQ feedback information for the first PDSCH. For example, in the case where the first PDSCH is indicated based on the dedicated RNTI, the first PDSCH is the retransmitted PDSCH, and the first PDSCH is the PDSCH for MBS, the first indication information may be used for determining whether to transmit the HARQ feedback information for the first PDSCH, and the second indication information may be ignored. For another example, in the case where the first PDSCH is indicated based on the dedicated RNTI, the first PDSCH is the retransmitted PDSCH, and the first PDSCH is the PDSCH for unicast services, the second indication information may be used for determining whether to transmit the HARQ feedback information for the first PDSCH, and the first indication information may be ignored. For another example, in the case where the first PDSCH is indicated based on the dedicated RNTI, the first PDSCH is the retransmitted PDSCH, and the first PDSCH is not the PDSCH for MBS, the second indication information may be used for determining whether to transmit the HARQ feedback information for the first PDSCH, and the first indication information may be ignored.

As described above, in MBS, the initial transmission may be performed in the MTP transmission mode, and the retransmission may be performed in the PTP transmission mode. Therefore, the first PDSCH being the PDSCH for MBS may include the following cases. The first PDSCH is the retransmitted PDSCH. An initially transmitted PDSCH corresponding to the first PDSCH may be a second PDSCH. The second PDSCH is indicated based on the first group identifier. The first PDSCH is indicated based on the dedicated RNTI.

It may be noted that, in the case where the first group identifier includes a G-RNTI, the second PDSCH may be scheduled or activated based on a PDCCH scrambled with the G-RNTI. In the case where the first group identifier includes a G-CS-RNTI, the second PDSCH may be a PDSCH for a configured DL assignment, and the configured DL assignment is associated with the G-CS-RNTI.

As can be seen from the embodiment, in the present disclosure, whether to use the first indication information or the second indication information may be determined based on the first PDSCH, and whether to use the first indication information or the second indication information may also be determined based on the initial transmission of the first PDSCH.

It may be noted that, a terminal device performing the method illustrated in FIG. 5 may be in an activated state.

It may be noted that, in the foregoing embodiments, whether to transmit the HARQ feedback information for the first PDSCH is determined according to the first indication information in the case of MBS is taken as an example for illustration. The foregoing embodiments may further include the following. In the case of MBS, whether to transmit the HARQ feedback information for the first PDSCH is determined according to the second indication information. The specific implementation is similar to that in the foregoing embodiments, which is not repeated herein.

In some scenarios, in the case of MBS, DRX also needs to be improved. For example, in the related art, a timer duration associated with DRX in MBS is set without taking NTN scenarios into account. As mentioned above, in NTN scenarios, the distance between the terminal device and the network device is relatively large, which results in a relatively long delay. Such a delay is not taken into account for DRX in MBS.

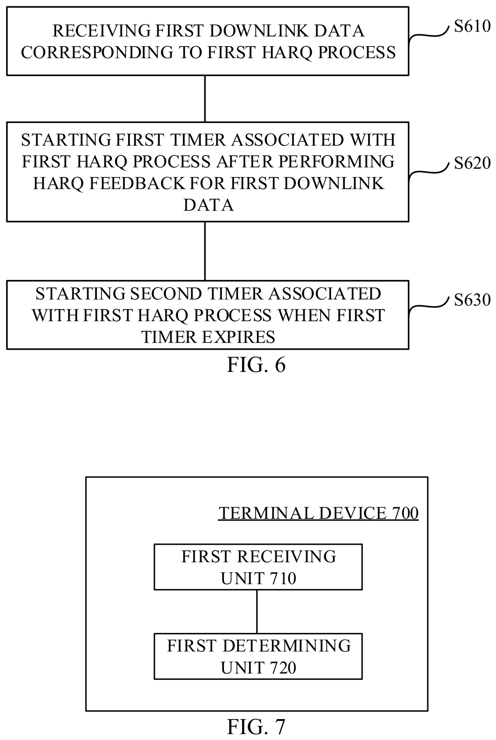

FIG. 6 illustrates a method for wireless communication provided in embodiments of the present disclosure, which is used to address the above problem. The method illustrated in FIG. 6 may be performed by a terminal device. The method illustrated in FIG. 6 may include operations at S610 to S630.

At S610, the terminal device receives first DL data corresponding to a first HARQ process.

The first DL data may be transmitted by a network device to the terminal device. The network device may include an NTN device. That is, the method illustrated in FIG. 6 is applicable to an NTN system. For example, the network device may include a satellite.

The first DL data may be indicated based on a first group identifier of the terminal device, and the first group identifier is configured with DRX. The first group identifier is described in detail above, which will not be repeated herein. In addition, since the first group identifier is associated with MBS, the DRX configured for the first group identifier may be referred to as "multicast DRX".

As can be seen, the first DL data may be DL multicast data. For example, the terminal device may receive the first DL data as follows. The terminal device receives a MAC PDU on a configured DL multicast assignment, or a PDCCH indicates a DL multicast transmission.

In the case where HARQ feedback is enabled for the first DL data, the terminal device may perform HARQ feedback for the first DL data, and may further perform operations at S620.

At step S620, the terminal device starts a first timer associated with the first HARQ process after performing HARQ feedback for the first downlink data.

A duration of the first timer is determined based on a round-trip time (RTT) between the terminal device and the network device, and PDCCH monitoring is not performed by the terminal device during running of the first timer.

After the terminal device performs HARQ feedback for the first DL data, the network device does not immediately perform transmission according to HARQ feedback. Therefore, the terminal device can start the first timer and does not perform PDCCH monitoring during the running of the first timer, thereby saving power consumption. In the present disclosure, the duration of the first timer is determined based on the RTT between the terminal device and the network device. That is, the duration of the first timer may be determined according to a distance between the terminal device and the network device. For example, in the case of a relatively long RTT, the duration of the first timer may be relatively long, i.e., the terminal device may not perform PDCCH monitoring for a relatively long period of time. Alternatively, in the case of a relatively short RTT, the duration of the first timer may be relatively short, i.e., the terminal device may not perform PDCCH monitoring for a relatively short period of time.

As can be seen, the terminal device can perform PDCCH monitoring only after the expiry of the first timer. Therefore, even in the NTN scenarios in which the distance between the terminal device and the network device is relatively long, the duration of the first timer may be determined based on the RTT, and thus the terminal device may not perform PDCCH monitoring for a relatively long period of time, thereby saving the power consumption required for PDCCH monitoring in NTN.

At S630, the terminal device starts a second timer associated with the first HARQ process when the first timer expires, where PDCCH monitoring is performed during running of the second timer.

After the first timer expires, the terminal device may receive retransmission data corresponding to the first DL data during the running of the second timer. In this case, the second timer may be a drx-RetransmissionTimerDL-PTM.

In some embodiments, the duration of the first timer may be determined based on a duration of a third timer and the RTT. The third timer is a timer associated with an HARQ process, and PDCCH monitoring is not performed during running of the third timer. For example, the third timer may be an HARQ RTT timer.

Optionally, the third timer may be associated with MBS. For example, the third timer may be associated with the PTM transmission mode. Exemplarily, the third timer may be a drx-HARQ-RTT-TimerDL-PTM.

As described above, the first timer is applicable to the NTN scenarios. Thus, in the case where the third timer is the drx-HARQ-RTT-TimerDL-PTM, the first timer may be expressed as drx-HARQ-RTT-TimerDL-PTM-NTN.

In some embodiments, the duration of the first timer is a sum of the duration of the third timer and the RTT. For example, the RTT is expressed as UE-gNB RTT, and the third timer is drx-HARQ-RTT-TimerDL-PTM. The duration of the first timer may be set to a sum of a duration of drx-HARQ-RTT-TimerDL-PTM and a latest value of the UE-gNB RTT. As can be seen, the UE-gNB RTT may also be referred to as "duration offset of the second timer".

It may be understood that, in the present disclosure, in consideration of long propagation delay between the terminal device and the network device in some scenarios (e.g., the NTN), a value of an additional UE-gNB RTT is introduced into drx-HARQ-RTT-TimerDL-PTM in the multicast DRX, and thus the duration of drx-HARQ-RTT-TimerDL-PTM may be prolonged appropriately. As such, the terminal device can perform PDCCH monitoring at an appropriate time, thereby avoiding additional power consumption caused by early performing PDCCH monitoring.

In some embodiments, the terminal device may start the first timer in a first symbol after the end of HARQ feedback. In other words, the first timer can be started immediately after the end of HARQ feedback.

In some embodiments, when the first timer expires, the terminal device starts the second timer in a first symbol after expiry of the first timer. In other words, the second timer can be started immediately after the expiry of the first timer.

It may be noted that, the methods illustrated in FIG. 5 and FIG. 6 may be implemented independently or in combination. In the case where the methods illustrated in FIG. 5 and FIG. 6 are implemented in combination, the terminal device can not only improve the transmission success rate of the multicast services, but also saving the power consumption for the transmission process of the multicast services, thereby improving the communication quality of the multicast services as well as the user experience.

The foregoing describes the method embodiments of the present disclosure in detail, and the following will describe apparatus embodiments of the present disclosure in detail. It may be understood that, the descriptions of the apparatus embodiments correspond to the descriptions of the method embodiments, and therefore, for parts that are not described in detail, reference may be made to the foregoing method embodiments.

FIG. 7 is a schematic structural diagram of a terminal device 700 provided in embodiments of the present disclosure. The terminal device 700 may include a first receiving unit 710 and a first determining unit 720. The first receiving unit 710 is configured to receive first indication information and second indication information, where the terminal device includes a first group identifier and a first HARQ process, the first indication information indicates whether HARQ feedback is enabled for the first group identifier, and the second indication information indicates whether HARQ feedback is enabled for the first HARQ process. The first determining unit 720 is configured to determine, according to the first indication information and/or the second indication information, whether to transmit HARQ feedback information for a first PDSCH, where the first PDSCH is associated with the first HARQ process.

In some embodiments, the terminal device determines, according to the first indication information and/or the second indication information, whether to transmit the HARQ feedback information for the first PDSCH as follows. In the case where the first PDSCH is indicated based on the first group identifier, whether to transmit the HARQ feedback information for the first PDSCH is determined according to the first indication information. Alternatively, in the case where the first PDSCH is a PDSCH for MBS, whether to transmit the HARQ feedback information for the first PDSCH is determined according to the first indication information.

In some embodiments, in the case where the first group identifier includes a G-RNTI, the first PDSCH is indicated based on the first group identifier as follows. The first PDSCH is scheduled based on a PDCCH scrambled with the G-RNTI. Additionally/alternatively, in the case where the first group identifier includes a G-CS-RNTI, the first PDSCH is indicated based on the first group identifier as follows. The first PDSCH is a PDSCH for a configured DL assignment, and the configured DL assignment is associated with the G-CS-RNTI.

In some embodiments, the terminal device determines, according to the first indication information and/or the second indication information, whether to transmit the HARQ feedback information for the first PDSCH as follows. In the case where the first PDSCH is indicated based on a dedicated RNTI for the terminal device, whether to transmit the HARQ feedback information for the first PDSCH is determined according to the first indication information and/or the second indication information.

In some embodiments, in the case where the first PDSCH is indicated based on the dedicated RNTI for the terminal device, whether to transmit the HARQ feedback information for the first PDSCH is determined according to the first indication information and/or the second indication information as follows. In the case where the first PDSCH is indicated based on the dedicated RNTI and the first PDSCH is a retransmitted PDSCH, whether to transmit the HARQ feedback information for the first PDSCH is determined according to the first indication information and/or the second indication information.

In some embodiments, in the case where the first PDSCH is indicated based on the dedicated RNTI and the first PDSCH is the retransmitted PDSCH, determining, according to the first indication information and/or the second indication information, whether to transmit the HARQ feedback information for the first PDSCH includes one or more of the following. In the case where the first PDSCH is indicated based on the dedicated RNTI, the first PDSCH is the retransmitted PDSCH, and the first PDSCH is a PDSCH for MBS, whether to transmit the HARQ feedback information for the first PDSCH is determined according to the first indication information. In the case where the first PDSCH is indicated based on the dedicated RNTI, the first PDSCH is the retransmitted PDSCH, and the first PDSCH is a PDSCH for unicast services, whether to transmit the HARQ feedback information for the first PDSCH is determined according to the second indication information. In the case where the first PDSCH is indicated based on the dedicated RNTI, the first PDSCH is the retransmitted PDSCH, and the first PDSCH is not the PDSCH for MBS, whether to transmit the HARQ feedback information for the first PDSCH is determined according to the second indication information.

In some embodiments, the first PDSCH is the PDSCH for MBS as follows. A second PDSCH is indicated based on the first group identifier, where the second PDSCH is an initially transmitted PDSCH corresponding to the first PDSCH.

In some embodiments, in the case where the first group identifier includes a G-RNTI, the second PDSCH is indicated based on the first group identifier as follows. The second PDSCH is scheduled based on a PDCCH scrambled with the G-RNTI. Additionally/alternatively, in the case where the first group identifier includes a G-CS-RNTI, the second PDSCH is indicated based on the first group identifier as follows. The second PDSCH is a PDSCH for a configured DL assignment, and the configured DL assignment is associated with the G-CS-RNTI.

In some embodiments, in the case where the first PDSCH is indicated based on the dedicated RNTI for the terminal device, whether to transmit the HARQ feedback information for the first PDSCH is determined according to the first indication information and/or the second indication information as follows. In the case where the first PDSCH is indicated based on the dedicated RNTI and the first PDSCH is an initially transmitted PDSCH, whether to transmit the HARQ feedback information for the first PDSCH is determined according to the second indication information.

In some embodiments, the first PDSCH is indicated based on the dedicated RNTI as follows. The first PDSCH is scheduled based on a PDCCH scrambled with the dedicated RNTI.

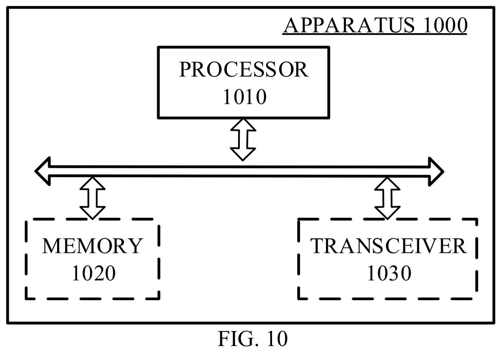

In an optional embodiment, the first receiving unit 710 may be a transceiver 1030, the first determining unit 720 may be a processor 1010, and the terminal device 700 may further include a memory 1020, as illustrated in FIG. 10.

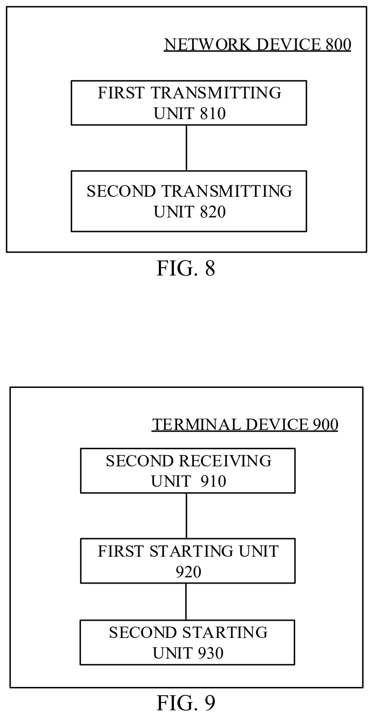

FIG. 8 is a schematic structural diagram of a network device 800 provided in embodiments of the present disclosure. The network device 800 may include a first transmitting unit 810 and a second transmitting unit 820. The first transmitting unit 810 is configured to transmit first indication information and second indication information to a terminal device, where the terminal device includes a first group identifier and a first HARQ process, the first indication information indicates whether HARQ feedback is enabled for the first group identifier, and the second indication information indicates whether HARQ feedback is enabled for the first HARQ process. The second transmitting unit 820 is configured to transmit a first PDSCH associated with the first HARQ process to the terminal device, where the first indication information and/or the second indication information is used for determining whether to transmit HARQ feedback information for the first PDSCH.

In some embodiments, the first indication information and/or the second indication information are used for determining whether to transmit the HARQ feedback information for the first PDSCH as follows. In the case where the first PDSCH is indicated based on the first group identifier, the first indication information is used for determining whether to transmit the HARQ feedback information for the first PDSCH. Alternatively, in the case where the first PDSCH is a PDSCH for MBS, the first indication information is used for determining whether to transmit the HARQ feedback information for the first PDSCH.

In some embodiments, in the case where the first group identifier includes a G-RNTI, the first PDSCH is indicated based on the first group identifier as follows. The first PDSCH is scheduled based on a PDCCH scrambled with the G-RNTI. Additionally/alternatively, in the case where the first group identifier includes a G-CS-RNTI, the first PDSCH is indicated based on the first group identifier as follows. The first PDSCH is a PDSCH for a configured DL assignment, and the configured DL assignment is associated with the G-CS-RNTI.

In some embodiments, the first indication information and/or the second indication information are used for determining whether to transmit the HARQ feedback information for the first PDSCH as follows. In the case where the first PDSCH is indicated based on a dedicated RNTI for the terminal device, the first indication information and/or the second indication information are used for determining whether to transmit the HARQ feedback information for the first PDSCH.

In some embodiments, in the case where the first PDSCH is indicated based on the dedicated RNTI for the terminal device, the first indication information and/or the second indication information are used for determining whether to transmit the HARQ feedback information for the first PDSCH as follows. In the case where the first PDSCH is indicated based on the dedicated RNTI and the first PDSCH is a retransmitted PDSCH, the first indication information and/or the second indication information are used for determining whether to transmit the HARQ feedback information for the first PDSCH.

In some embodiments, in the case where the first PDSCH is indicated based on the dedicated RNTI and the first PDSCH is the retransmitted PDSCH, the first indication information and/or the second indication information being used for determining whether to transmit the HARQ feedback information for the first PDSCH includes one or more of the following. In the case where the first PDSCH is indicated based on the dedicated RNTI, the first PDSCH is the retransmitted PDSCH, and the first PDSCH is a PDSCH for MBS, the first indication information is used for determining whether to transmit the HARQ feedback information for the first PDSCH. In the case where the first PDSCH is indicated based on the dedicated RNTI, the first PDSCH is the retransmitted PDSCH, and the first PDSCH is a PDSCH for unicast services, the second indication information is used for determining whether to transmit the HARQ feedback information for the first PDSCH. In the case where the first PDSCH is indicated based on the dedicated RNTI, the first PDSCH is the retransmitted PDSCH, and the first PDSCH is not the PDSCH for MBS, the second indication information is used for determining whether to transmit the HARQ feedback information for the first PDSCH.

In some embodiments, the first PDSCH is the PDSCH for MBS as follows. A second PDSCH is indicated based on the first group identifier, where the second PDSCH is an initially transmitted PDSCH corresponding to the first PDSCH.

In some embodiments, in the case where the first group identifier includes a G-RNTI, the second PDSCH is indicated based on the first group identifier as follows. The second PDSCH is scheduled based on a PDCCH scrambled with the G-RNTI. Additionally/alternatively, in the case where the first group identifier includes a G-CS-RNTI, the second PDSCH is indicated based on the first group identifier as follows. The second PDSCH is a PDSCH for a configured DL assignment, and the configured DL assignment is associated with the G-CS-RNTI.

In some embodiments, in the case where the first PDSCH is indicated based on the dedicated RNTI for the terminal device, the first indication information and/or the second indication information are used for determining whether to transmit the HARQ feedback information for the first PDSCH as follows. In the case where the first PDSCH is indicated based on the dedicated RNTI and the first PDSCH is an initially transmitted PDSCH, the second indication information is used for determining whether to transmit the HARQ feedback information for the first PDSCH.

In some embodiments, the first PDSCH is indicated based on the dedicated RNTI as follows. The first PDSCH is scheduled based on a PDCCH scrambled with the dedicated RNTI.

In an optional embodiment, the first transmitting unit 810 and the second transmitting unit 820 each may be a transceiver 1030, and the network device 800 may further include a memory 1020 and a processor 1010, as illustrated in FIG. 10.

FIG. 9 is a schematic structural diagram of a terminal device 900 provided in embodiments of the present disclosure. The terminal device 900 may include a second receiving unit 910, a first starting unit 920, and a second starting unit 930. The second receiving unit 910 is configured to receive first DL data corresponding to a first HARQ process, where the first DL data is indicated based on a first group identifier of the terminal device, and the first group identifier is configured with DRX. The first starting unit 920 is configured to start a first timer associated with the first HARQ process after performing HARQ feedback for the first DL data, where a duration of the first timer is determined based on an RTT between the terminal device and a network device, and PDCCH monitoring is not performed during running of the first timer. The second starting unit 930 is configured to start a second timer associated with the first HARQ process when the first timer expires, where PDCCH monitoring is performed during running of the second timer.

In some embodiments, the duration of the first timer is determined based on a duration of a third timer and the RTT, where the third timer is a timer associated with an HARQ process, the third timer is associated with a PTM transmission mode, and PDCCH monitoring is not performed during running of the third timer.

In some embodiments, the third timer is a DL DRX HARQ RTT timer for the PTM transmission scheme (drx-HARQ-RTT-TimerDL-PTM).

In some embodiments, the duration of the first timer is a sum of the duration of the third timer and the RTT.

In some embodiments, the first group identifier includes a G-RNTI and/or a G-CS-RNTI.

In some embodiments, the second timer is a DL DRX retransmission timer for the PTM transmission scheme (drx-RetransmissionTimerDL-PTM).

In some embodiments, the terminal device starts the first timer associated with the first HARQ process as follows. The terminal device starts the first timer in a first symbol after the end of HARQ feedback.

In some embodiments, the second timer associated with the first HARQ process is started when the first timer expires as follows. When the first timer expires, the second timer is started in a first symbol after expiry of the first timer.

In an optional embodiment, the second receiving unit 910 may be a transceiver 1030, and the first starting unit 920 or the second starting unit 930 may be a processor 1010. The terminal device 900 may further include a memory 1020, as illustrated in FIG. 10.

FIG. 10 is a schematic structural diagram of an apparatus for communication provided in embodiments of the present disclosure. The dashed lines in FIG. 10 indicate that a unit or a module is optional. The apparatus 1000 may be used to implement the method in the method embodiments. The apparatus 1000 may be a chip, a terminal device, or a network device.

The apparatus 1000 may include one or more processors 1010. The processor 1010 may support the apparatus 1000 in implementing the method in the foregoing method embodiments. The processor 1010 may be a general-purpose processor or a specialized processor. For example, the processor may be a central processing unit (CPU). Alternatively, the processor may be another general-purpose processor, a digital signal processor (DSP), an application-specific integrated circuit (ASIC), a field programmable gate array (FPGA), or other programmable logic devices, discrete gates or transistor logic devices, or discrete hardware components. The general-purpose processor can be a microprocessor, any conventional processor, etc.

The apparatus 1000 may further include one or more memories 1020. The memory 1020 is configured to store a program which, when executed by the processer 1010, causes the processor 1010 to perform the method in embodiments of the present disclosure. The memory 1020 may be independent of the processor 1010, or may be integrated into the processor 1010.

The apparatus 1000 may further include a transceiver 1030. The processor 1010 may communicate with other devices or chips via the transceiver 1030. For example, the processor 1010 may transmit data to and receive data from other devices or chips via the transceiver 1030.

A computer-readable storage medium is further provided in embodiments of the present disclosure. The computer-readable storage medium is configured to store a program. The computer-readable storage medium is applicable to the terminal or the network device provided in embodiments of the present disclosure, and the program causes a computer to perform the method performed by the terminal or the network device in various embodiments of the present disclosure.

A computer program product is further provided in embodiments of the present disclosure. The computer program product includes a program. The computer program product is applicable to the terminal or the network device provided in embodiments of the present disclosure, and the program causes a computer to perform the method performed by the terminal or the network device in various embodiments of the present disclosure.

A computer program is further provided in embodiments of the present disclosure. The computer program is applicable to the terminal or the network device provided in embodiments of the present disclosure, and the computer program causes a computer to perform the method performed by the terminal or the network device in various embodiments of the present disclosure.

It may be understood that, the terms "system" and "network" in the present disclosure may be used interchangeably. In addition, the terms used in the present disclosure are only used to explain specific embodiments of the present disclosure, and are not intended to limit the present disclosure. The terms "first", "second", "third", "fourth", etc., in the specification, claims, and drawings of the present disclosure are used to distinguish between different objects, rather than to describe a specific order. In addition, the terms "include", "comprise", and "have" and any variations thereof are intended to cover a non-exclusive inclusion.

In embodiments of the present disclosure, the "indication" mentioned herein may be a direct indication or an indirect indication, or indicate an association relationship. For example, if A indicates B, it may mean that A directly indicates B, for example, B can be obtained from A. Alternatively, it may mean that A indicates B indirectly, for example, A indicates C, and B can be obtained from C. Alternatively, it may mean that there is an association relationship between A and B.

In embodiments of the present disclosure, "B corresponding to A" means that B is associated with A, and B may be determined based on A. However, it may also be understood that, determining B according to A does not mean determining B only according to A, but instead B may be determined according to A and/or other information.

In embodiments of the present disclosure, the term "correspond" may mean that there is a direct or indirect correspondence between the two, or may mean that there is an association relationship between the two, or may mean that there is a relationship such as indicating and being indicated, or configuring and being configured.

In embodiments of the present disclosure, "predefining" or "preconfiguring" may be implemented in a manner in which corresponding code, a table, or other related information used for indication is prestored in a device (for example, including a terminal device and a network device), and a specific embodiment is not limited in the present disclosure. For example, the "predefining" may refer to being defined in a protocol.

In embodiments of the present disclosure, the "protocol" may refer to a standard protocol in the field of communication, for example, may include an LTE protocol, an NR protocol, and a related protocol applicable to future communication systems, which is not limited in the present disclosure.

In embodiments of the present disclosure, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of the present disclosure, "comprising" or "including" may refer to a direct inclusion or an indirect inclusion. Optionally, the terms "comprising" and "including" mentioned in embodiments of the present disclosure may be replaced with "indicating" or "being used for determining". For example, "A comprises B" may be replaced with "A indicates B" or "A is used for determining B".

In embodiments of the present disclosure, sequence numbers of the foregoing processes do not mean execution sequences. The execution sequences of the processes shall be determined according to functions and internal logic of the processes, and shall not be construed as any limitation on the embodiment processes of embodiments of the present disclosure.

In several embodiments provided in the present disclosure, it may be understood that, the disclosed system, apparatus, and method may be implemented in other manners. For example, the described apparatus embodiments are merely examples. For example, the unit division is merely logical function division and may be another division in actual embodiment. For example, multiple units or components may be combined or integrated into another system, or some features may be ignored or not executed. In addition, the displayed or discussed mutual couplings or direct couplings or communication connections may be implemented by using some interfaces. The indirect couplings or communication connections between the apparatuses or units may be implemented in electronic, mechanical, or other forms.

Units described as separate components may be or may not be physically separate, and components displayed as units may be or may not be physical units, that is, may be located in one place or distributed on a plurality of network units. Some or all of the units may be selected according to actual requirements to achieve the objective of the solutions of embodiments of the present disclosure.

In addition, function units in embodiments of the present disclosure may be integrated into one processing unit, or each of the units may exist alone physically, or two or more units may be integrated into one unit.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of the embodiments of the present disclosure are performed. The computer can be a general-purpose computer, a special-purpose computer, a computer network, or other programmable apparatuses. The computer instruction can be stored in a computer-readable storage medium, or sent from one computer-readable storage medium to another computer-readable storage medium. For example, the computer instruction can be sent from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer-accessible usable medium or a data storage device such as a server, a data center, etc., which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely embodiments of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for wireless communication, comprising:
receiving, by a terminal device, first indication information and second indication information, wherein the terminal device comprises a first group identifier and a first hybrid automatic repeat request (HARQ) process, the first indication information indicates whether HARQ feedback is enabled for the first group identifier, and the second indication information indicates whether HARQ feedback is enabled for the first HARQ process; and
determining, by the terminal device according to the first indication information and/or the second indication information, whether to transmit HARQ feedback information for a first physical downlink shared channel (PDSCH), wherein the first PDSCH is associated with the first HARQ process.

2. The method of claim 1, wherein determining, by the terminal device according to the first indication information and/or the second indication information, whether to transmit the HARQ feedback information for the first PDSCH comprises:
in a case where the first PDSCH is indicated based on the first group identifier, determining, by the terminal device according to the first indication information, whether to transmit the HARQ feedback information for the first PDSCH; or
in a case where the first PDSCH is a PDSCH for multicast/broadcast services (MBS), determining, by the terminal device according to the first indication information, whether to transmit the HARQ feedback information for the first PDSCH.

3. The method of claim 2, wherein
in a case where the first group identifier comprises a group radio network temporary identifier (G-RNTI), the first PDSCH being indicated based on the first group identifier comprises: the first PDSCH being scheduled based on a physical downlink control channel (PDCCH) scrambled with the G-RNTI; and/or
in a case where the first group identifier comprises a group configured scheduling radio network temporary identifier (G-CS-RNTI), the first PDSCH being indicated based on the first group identifier comprises: the first PDSCH being a PDSCH for a configured downlink assignment, and the configured downlink assignment being associated with the G-CS-RNTI.

4. The method of any one of claims 1 to 3, wherein determining, by the terminal device according to the first indication information and/or the second indication information, whether to transmit the HARQ feedback information for the first PDSCH comprises:
in a case where the first PDSCH is indicated based on a dedicated radio network temporary identifier (RNTI) for the terminal device, determining, by the terminal device according to the first indication information and/or the second indication information, whether to transmit the HARQ feedback information for the first PDSCH.

5. The method of claim 4, wherein in the case where the first PDSCH is indicated based on the dedicated RNTI for the terminal device, determining, by the terminal device according to the first indication information and/or the second indication information, whether to transmit the HARQ feedback information for the first PDSCH comprises:
in a case where the first PDSCH is indicated based on the dedicated RNTI and the first PDSCH is a retransmitted PDSCH, determining, by the terminal device according to the first indication information and/or the second indication information, whether to transmit the HARQ feedback information for the first PDSCH.

6. The method of claim 5, wherein in the case where the first PDSCH is indicated based on the dedicated RNTI and the first PDSCH is the retransmitted PDSCH, determining, by the terminal device according to the first indication information and/or the second indication information, whether to transmit the HARQ feedback information for the first PDSCH comprises one or more of:
in a case where the first PDSCH is indicated based on the dedicated RNTI, the first PDSCH is the retransmitted PDSCH, and the first PDSCH is a PDSCH for MBS, determining, by the terminal device according to the first indication information, whether to transmit the HARQ feedback information for the first PDSCH;
in a case where the first PDSCH is indicated based on the dedicated RNTI, the first PDSCH is the retransmitted PDSCH, and the first PDSCH is a PDSCH for unicast services, determining, by the terminal device according to the second indication information, whether to transmit the HARQ feedback information for the first PDSCH; and
in a case where the first PDSCH is indicated based on the dedicated RNTI, the first PDSCH is the retransmitted PDSCH, and the first PDSCH is not the PDSCH for MBS, determining, by the terminal device according to the second indication information, whether to transmit the HARQ feedback information for the first PDSCH.

7. The method of claim 6, wherein the first PDSCH being the PDSCH for MBS comprises:
a second PDSCH being indicated based on the first group identifier, wherein the second PDSCH is an initially transmitted PDSCH corresponding to the first PDSCH.

8. The method of claim 7, wherein
in a case where the first group identifier comprises a G-RNTI, the second PDSCH being indicated based on the first group identifier comprises: the second PDSCH being scheduled based on a PDCCH scrambled with the G-RNTI; and/or
in a case where the first group identifier comprises a G-CS-RNTI, the second PDSCH being indicated based on the first group identifier comprises: the second PDSCH being a PDSCH for a configured downlink assignment, and the configured downlink assignment being associated with the G-CS-RNTI.

9. The method of claim 4, wherein in the case where the first PDSCH is indicated based on the dedicated RNTI for the terminal device, determining, by the terminal device according to the first indication information and/or the second indication information, whether to transmit the HARQ feedback information for the first PDSCH comprises:
in a case where the first PDSCH is indicated based on the dedicated RNTI and the first PDSCH is an initially transmitted PDSCH, determining, by the terminal device according to the second indication information, whether to transmit the HARQ feedback information for the first PDSCH.

10. The method of any one of claims 4 to 9, wherein the first PDSCH being indicated based on the dedicated RNTI comprises: the first PDSCH being scheduled based on a PDCCH scrambled with the dedicated RNTI.

11. A method for wireless communication, comprising:
transmitting, by a network device, first indication information and second indication information to a terminal device, wherein the terminal device comprises a first group identifier and a first hybrid automatic repeat request (HARQ) process, the first indication information indicates whether HARQ feedback is enabled for the first group identifier, and the second indication information indicates whether HARQ feedback is enabled for the first HARQ process; and
transmitting, by the network device, a first physical downlink shared channel (PDSCH) associated with the first HARQ process to the terminal device, wherein the first indication information and/or the second indication information is used for determining whether to transmit HARQ feedback information for the first PDSCH.

12. The method of claim 11, wherein the first indication information and/or the second indication information being used for determining whether to transmit the HARQ feedback information for the first PDSCH comprises:
in a case where the first PDSCH is indicated based on the first group identifier, the first indication information being used for determining whether to transmit the HARQ feedback information for the first PDSCH; or
in a case where the first PDSCH is a PDSCH for multicast/broadcast services (MBS), the first indication information being used for determining whether to transmit the HARQ feedback information for the first PDSCH.

13. The method of claim 12, wherein
in a case where the first group identifier comprises a group radio network temporary identifier (G-RNTI), the first PDSCH being indicated based on the first group identifier comprises: the first PDSCH being scheduled based on a physical downlink control channel (PDCCH) scrambled with the G-RNTI; and/or
in a case where the first group identifier comprises a group configured scheduling radio network temporary identifier (G-CS-RNTI), the first PDSCH being indicated based on the first group identifier comprises: the first PDSCH being a PDSCH for a configured downlink assignment, and the configured downlink assignment being associated with the G-CS-RNTI.

14. The method of any one of claims 11 to 13, wherein the first indication information and/or the second indication information being used for determining whether to transmit the HARQ feedback information for the first PDSCH comprises:
in a case where the first PDSCH is indicated based on a dedicated radio network temporary identifier (RNTI) for the terminal device, the first indication information and/or the second indication information being used for determining whether to transmit the HARQ feedback information for the first PDSCH.

15. The method of claim 14, wherein in the case where the first PDSCH is indicated based on the dedicated RNTI for the terminal device, the first indication information and/or the second indication information being used for determining whether to transmit the HARQ feedback information for the first PDSCH comprises:
in a case where the first PDSCH is indicated based on the dedicated RNTI and the first PDSCH is a retransmitted PDSCH, the first indication information and/or the second indication information being used for determining whether to transmit the HARQ feedback information for the first PDSCH.

16. The method of claim 15, wherein in the case where the first PDSCH is indicated based on the dedicated RNTI and the first PDSCH is the retransmitted PDSCH, the first indication information and/or the second indication information being used for determining whether to transmit the HARQ feedback information for the first PDSCH comprises one or more of:
in a case where the first PDSCH is indicated based on the dedicated RNTI, the first PDSCH is the retransmitted PDSCH, and the first PDSCH is a PDSCH for MBS, the first indication information being used for determining whether to transmit the HARQ feedback information for the first PDSCH;
in a case where the first PDSCH is indicated based on the dedicated RNTI, the first PDSCH is the retransmitted PDSCH, and the first PDSCH is a PDSCH for unicast services, the second indication information being used for determining whether to transmit the HARQ feedback information for the first PDSCH; and
in a case where the first PDSCH is indicated based on the dedicated RNTI, the first PDSCH is the retransmitted PDSCH, and the first PDSCH is not the PDSCH for MBS, the second indication information being used for determining whether to transmit the HARQ feedback information for the first PDSCH.

17. The method of claim 16, wherein the first PDSCH being the PDSCH for MBS comprises:
a second PDSCH being indicated based on the first group identifier, wherein the second PDSCH is an initially transmitted PDSCH corresponding to the first PDSCH.

18. The method of claim 17, wherein
in a case where the first group identifier comprises a G-RNTI, the second PDSCH being indicated based on the first group identifier comprises: the second PDSCH being scheduled based on a PDCCH scrambled with the G-RNTI; and/or
in a case where the first group identifier comprises a G-CS-RNTI, the second PDSCH being indicated based on the first group identifier comprises: the second PDSCH being a PDSCH for a configured downlink assignment, and the configured downlink assignment being associated with the G-CS-RNTI.

19. The method of claim 14, wherein in the case where the first PDSCH is indicated based on the dedicated RNTI for the terminal device, the first indication information and/or the second indication information being used for determining whether to transmit the HARQ feedback information for the first PDSCH comprises:
in a case where the first PDSCH is indicated based on the dedicated RNTI and the first PDSCH is an initially transmitted PDSCH, the second indication information being used for determining whether to transmit the HARQ feedback information for the first PDSCH.

20. The method of any one of claims 14 to 19, wherein the first PDSCH being indicated based on the dedicated RNTI comprises: the first PDSCH being scheduled based on a PDCCH scrambled with the dedicated RNTI.

21. A method for wireless communication, comprising:
receiving, by a terminal device, first downlink data corresponding to a first hybrid automatic repeat request (HARQ) process, wherein the first downlink data is indicated based on a first group identifier of the terminal device, and the first group identifier is configured with discontinuous reception (DRX);
starting, by the terminal device, a first timer associated with the first HARQ process after performing HARQ feedback for the first downlink data, wherein a duration of the first timer is determined based on a round-trip time (RTT) between the terminal device and a network device, and physical downlink control channel (PDCCH) monitoring is not performed during running of the first timer; and
starting, by the terminal device, a second timer associated with the first HARQ process when the first timer expires, wherein PDCCH monitoring is performed during running of the second timer.

22. The method of claim 21, wherein the duration of the first timer is determined based on a duration of a third timer and the RTT, wherein the third timer is a timer associated with an HARQ process, the third timer is associated with a point-to-multipoint (PTM) transmission mode, and PDCCH monitoring is not performed during running of the third timer.

23. The method of claim 22, wherein the third timer is a drx-HARQ-RTT-Timerdownlink, TimerDL, -PTM.

24. The method of claim 22 or 23, wherein the duration of the first timer is a sum of the duration of the third timer and the RTT.

25. The method of any one of claims 21 to 24, wherein the first group identifier comprises a group radio network temporary identifier (G-RNTI) and/or a group configured scheduling radio network temporary identifier (G-CS-RNTI).

26. The method of any one of claims 21 to 25, wherein the second timer is a drx-RetransmissionTimerDL-PTM.

27. The method of any one of claims 21 to 26, wherein starting, by the terminal device, the first timer associated with the first HARQ process comprises:
starting, by the terminal device, the first timer in a first symbol after an end of HARQ feedback.

28. The method of any one of claims 21 to 27, wherein starting, by the terminal device, the second timer associated with the first HARQ process when the first timer expires comprises:
when the first timer expires, starting, by the terminal device, the second timer in a first symbol after expiry of the first timer.

29. A terminal device, comprising:
a first receiving unit configured to receive first indication information and second indication information, wherein the terminal device comprises a first group identifier and a first hybrid automatic repeat request (HARQ) process, the first indication information indicates whether HARQ feedback is enabled for the first group identifier, and the second indication information indicates whether HARQ feedback is enabled for the first HARQ process; and
a first determining unit configured to determine, according to the first indication information and/or the second indication information, whether to transmit HARQ feedback information for a first physical downlink shared channel (PDSCH), wherein the first PDSCH is associated with the first HARQ process.

30. The terminal device of claim 29, wherein determining, according to the first indication information and/or the second indication information, whether to transmit the HARQ feedback information for the first PDSCH comprises:
in a case where the first PDSCH is indicated based on the first group identifier, determining, according to the first indication information, whether to transmit the HARQ feedback information for the first PDSCH; or
in a case where the first PDSCH is a PDSCH for multicast/broadcast services (MBS), determining, according to the first indication information, whether to transmit the HARQ feedback information for the first PDSCH.

31. The terminal device of claim 30, wherein
in a case where the first group identifier comprises a group radio network temporary identifier (G-RNTI), the first PDSCH being indicated based on the first group identifier comprises: the first PDSCH being scheduled based on a physical downlink control channel (PDCCH) scrambled with the G-RNTI; and/or
in a case where the first group identifier comprises a group configured scheduling radio network temporary identifier (G-CS-RNTI), the first PDSCH being indicated based on the first group identifier comprises: the first PDSCH being a PDSCH for a configured downlink assignment, and the configured downlink assignment being associated with the G-CS-RNTI.

32. The terminal device of any one of claims 29 to 31, wherein determining, according to the first indication information and/or the second indication information, whether to transmit the HARQ feedback information for the first PDSCH comprises:
in a case where the first PDSCH is indicated based on a dedicated radio network temporary identifier (RNTI) for the terminal device, determining, according to the first indication information and/or the second indication information, whether to transmit the HARQ feedback information for the first PDSCH.

33. The terminal device of claim 32, wherein in the case where the first PDSCH is indicated based on the dedicated RNTI for the terminal device, determining, according to the first indication information and/or the second indication information, whether to transmit the HARQ feedback information for the first PDSCH comprises:
in a case where the first PDSCH is indicated based on the dedicated RNTI and the first PDSCH is a retransmitted PDSCH, determining, according to the first indication information and/or the second indication information, whether to transmit the HARQ feedback information for the first PDSCH.

34. The terminal device of claim 33, wherein in the case where the first PDSCH is indicated based on the dedicated RNTI and the first PDSCH is the retransmitted PDSCH, determining, according to the first indication information and/or the second indication information, whether to transmit the HARQ feedback information for the first PDSCH comprises one or more of:
in a case where the first PDSCH is indicated based on the dedicated RNTI, the first PDSCH is the retransmitted PDSCH, and the first PDSCH is a PDSCH for MBS, determining, according to the first indication information, whether to transmit the HARQ feedback information for the first PDSCH;
in a case where the first PDSCH is indicated based on the dedicated RNTI, the first PDSCH is the retransmitted PDSCH, and the first PDSCH is a PDSCH for unicast services, determining, according to the second indication information, whether to transmit the HARQ feedback information for the first PDSCH; and
in a case where the first PDSCH is indicated based on the dedicated RNTI, the first PDSCH is the retransmitted PDSCH, and the first PDSCH is not the PDSCH for MBS, determining, according to the second indication information, whether to transmit the HARQ feedback information for the first PDSCH.

35. The terminal device of claim 34, wherein the first PDSCH being the PDSCH for MBS comprises:
a second PDSCH being indicated based on the first group identifier, wherein the second PDSCH is an initially transmitted PDSCH corresponding to the first PDSCH.

36. The terminal device of claim 35, wherein
in a case where the first group identifier comprises a G-RNTI, the second PDSCH being indicated based on the first group identifier comprises: the second PDSCH being scheduled based on a PDCCH scrambled with the G-RNTI; and/or
in a case where the first group identifier comprises a G-CS-RNTI, the second PDSCH being indicated based on the first group identifier comprises: the second PDSCH being a PDSCH for a configured downlink assignment, and the configured downlink assignment being associated with the G-CS-RNTI.

37. The terminal device of claim 32, wherein in the case where the first PDSCH is indicated based on the dedicated RNTI for the terminal device, determining, according to the first indication information and/or the second indication information, whether to transmit the HARQ feedback information for the first PDSCH comprises:
in a case where the first PDSCH is indicated based on the dedicated RNTI and the first PDSCH is an initially transmitted PDSCH, determining, according to the second indication information, whether to transmit the HARQ feedback information for the first PDSCH.

38. The terminal device of any one of claims 32 to 37, wherein the first PDSCH being indicated based on the dedicated RNTI comprises: the first PDSCH being scheduled based on a PDCCH scrambled with the dedicated RNTI.

39. A network device, comprising:
a first transmitting unit configured to transmit first indication information and second indication information to a terminal device, wherein the terminal device comprises a first group identifier and a first hybrid automatic repeat request (HARQ) process, the first indication information indicates whether HARQ feedback is enabled for the first group identifier, and the second indication information indicates whether HARQ feedback is enabled for the first HARQ process; and
a second transmitting unit configured to transmit a first physical downlink shared channel (PDSCH) associated with the first HARQ process to the terminal device, wherein the first indication information and/or the second indication information is used for determining whether to transmit HARQ feedback information for the first PDSCH.

40. The network device of claim 39, wherein the first indication information and/or the second indication information being used for determining whether to transmit the HARQ feedback information for the first PDSCH comprises:
in a case where the first PDSCH is indicated based on the first group identifier, the first indication information being used for determining whether to transmit the HARQ feedback information for the first PDSCH; or
in a case where the first PDSCH is a PDSCH for multicast/broadcast services (MBS), the first indication information being used for determining whether to transmit the HARQ feedback information for the first PDSCH.

41. The network device of claim 40, wherein
in a case where the first group identifier comprises a group radio network temporary identifier (G-RNTI), the first PDSCH being indicated based on the first group identifier comprises: the first PDSCH being scheduled based on a physical downlink control channel (PDCCH) scrambled with the G-RNTI; and/or
in a case where the first group identifier comprises a group configured scheduling radio network temporary identifier (G-CS-RNTI), the first PDSCH being indicated based on the first group identifier comprises: the first PDSCH being a PDSCH for a configured downlink assignment, and the configured downlink assignment being associated with the G-CS-RNTI.

42. The network device of any one of claims 39 to 41, wherein the first indication information and/or the second indication information being used for determining whether to transmit the HARQ feedback information for the first PDSCH comprises:
in a case where the first PDSCH is indicated based on a dedicated radio network temporary identifier (RNTI) for the terminal device, the first indication information and/or the second indication information being used for determining whether to transmit the HARQ feedback information for the first PDSCH.

43. The network device of claim 42, wherein in the case where the first PDSCH is indicated based on the dedicated RNTI for the terminal device, the first indication information and/or the second indication information being used for determining whether to transmit the HARQ feedback information for the first PDSCH comprises:
in a case where the first PDSCH is indicated based on the dedicated RNTI and the first PDSCH is a retransmitted PDSCH, the first indication information and/or the second indication information being used for determining whether to transmit the HARQ feedback information for the first PDSCH.

44. The network device of claim 43, wherein in the case where the first PDSCH is indicated based on the dedicated RNTI and the first PDSCH is the retransmitted PDSCH, the first indication information and/or the second indication information being used for determining whether to transmit the HARQ feedback information for the first PDSCH comprises one or more of:
in a case where the first PDSCH is indicated based on the dedicated RNTI, the first PDSCH is the retransmitted PDSCH, and the first PDSCH is a PDSCH for MBS, the first indication information being used for determining whether to transmit the HARQ feedback information for the first PDSCH;
in a case where the first PDSCH is indicated based on the dedicated RNTI, the first PDSCH is the retransmitted PDSCH, and the first PDSCH is a PDSCH for unicast services, the second indication information being used for determining whether to transmit the HARQ feedback information for the first PDSCH; and
in a case where the first PDSCH is indicated based on the dedicated RNTI, the first PDSCH is the retransmitted PDSCH, and the first PDSCH is not the PDSCH for MBS, the second indication information being used for determining whether to transmit the HARQ feedback information for the first PDSCH.

45. The network device of claim 44, wherein the first PDSCH being the PDSCH for MBS comprises:
a second PDSCH being indicated based on the first group identifier, wherein the second PDSCH is an initially transmitted PDSCH corresponding to the first PDSCH.

46. The network device of claim 45, wherein
in a case where the first group identifier comprises a G-RNTI, the second PDSCH being indicated based on the first group identifier comprises: the second PDSCH being scheduled based on a PDCCH scrambled with the G-RNTI; and/or
in a case where the first group identifier comprises a G-CS-RNTI, the second PDSCH being indicated based on the first group identifier comprises: the second PDSCH being a PDSCH for a configured downlink assignment, and the configured downlink assignment being associated with the G-CS-RNTI.

47. The network device of claim 42, wherein in the case where the first PDSCH is indicated based on the dedicated RNTI for the terminal device, the first indication information and/or the second indication information being used for determining whether to transmit the HARQ feedback information for the first PDSCH comprises:
in a case where the first PDSCH is indicated based on the dedicated RNTI and the first PDSCH is an initially transmitted PDSCH, the second indication information being used for determining whether to transmit the HARQ feedback information for the first PDSCH.

48. The network device of any one of claims 42 to 47, wherein the first PDSCH being indicated based on the dedicated RNTI comprises: the first PDSCH being scheduled based on a PDCCH scrambled with the dedicated RNTI.

49. A terminal device, comprising:
a second receiving unit configured to receive first downlink data corresponding to a first hybrid automatic repeat request (HARQ) process, wherein the first downlink data is indicated based on a first group identifier of the terminal device, and the first group identifier is configured with discontinuous reception (DRX);
a first starting unit configured to start a first timer associated with the first HARQ process after performing HARQ feedback for the first downlink data, wherein a duration of the first timer is determined based on a round-trip time (RTT) between the terminal device and a network device, and physical downlink control channel (PDCCH) monitoring is not performed during running of the first timer; and
a second starting unit configured to start a second timer associated with the first HARQ process when the first timer expires, wherein PDCCH monitoring is performed during running of the second timer.

50. The terminal device of claim 49, wherein the duration of the first timer is determined based on a duration of a third timer and the RTT, wherein the third timer is a timer associated with an HARQ process, the third timer is associated with a point-to-multipoint (PTM) transmission mode, and PDCCH monitoring is not performed during running of the third timer.

51. The terminal device of claim 50, wherein the third timer is a drx-HARQ-RTT-Timerdownlink, TimerDL, -PTM.

52. The terminal device of claim 50 or 51, wherein the duration of the first timer is a sum of the duration of the third timer and the RTT.

53. The terminal device of any one of claims 49 to 52, wherein the first group identifier comprises a group radio network temporary identifier (G-RNTI) and/or a group configured scheduling radio network temporary identifier (G-CS-RNTI).

54. The terminal device of any one of claims 49 to 53, wherein the second timer is a drx-RetransmissionTimerDL-PTM.

55. The terminal device of any one of claims 49 to 54, wherein starting, by the terminal device, the first timer associated with the first HARQ process comprises:
starting, by the terminal device, the first timer in a first symbol after an end of HARQ feedback.

56. The terminal device of any one of claims 49 to 55, wherein starting the second timer associated with the first HARQ process when the first timer expires comprises:
when the first timer expires, starting the second timer in a first symbol after expiry of the first timer.

57. A terminal device, comprising:
a memory configured to store a program; and
a processor configured to invoke the program stored in the memory, to cause the terminal device to perform the method of any one of claims 1 to 10 or claims 21 to 28.

58. A network device, comprising:
a memory configured to store a program; and
a processor configured to invoke the program stored in the memory, to cause the network device to perform the method of any one of claims 11 to 20.

59. An apparatus, comprising:
a processor configured to invoke a program stored in a memory, to cause the apparatus to perform the method of any one of claims 1 to 28.

60. A chip, comprising:
a processor configured to invoke a program stored in a memory, to cause a device equipped with the chip to perform the method of any one of claims 1 to 28.

61. A computer-readable storage medium configured to store a program that causes a computer to perform the method of any one of claims 1 to 28.

62. A computer program product comprising a program that causes a computer to perform the method of any one of claims 1 to 28.

63. A computer program being operable with a computer to perform the method of any one of claims 1 to 17.
